(19) Europäisches Patentamt
European Patent Office
Office européen des brevets

(11) **EP 2 952 402 B1**

(12) **EUROPEAN PATENT SPECIFICATION**

(45) Date of publication and mention
of the grant of the patent:
**05.08.2020 Bulletin 2020/32**

(51) Int Cl.:
***B60W 30/14*** *(2006.01)*          ***B60W 40/04*** *(2006.01)*

(21) Application number: **15168929.6**

(22) Date of filing: **22.05.2015**

(54) **METHOD AND SYSTEM FOR ADAPTATION OF THE PROPULSION OF A VEHICLE RELATIVE A PRECEDING VEHICLE**

VERFAHREN UND SYSTEM ZUR ANPASSUNG DES ANTRIEBS EINES FAHRZEUGS RELATIV ZU EINEM VORANFAHRENDEN FAHRZEUG

PROCÉDÉ ET SYSTÈME D'ADAPTATION DE LA PROPULSION D'UN VÉHICULE RELATIF À UN VÉHICULE ANTÉRIEUR.

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.06.2014 SE 1450686**

(43) Date of publication of application:
**09.12.2015 Bulletin 2015/50**

(73) Proprietor: **Scania CV AB
151 87 Södertälje (SE)**

(72) Inventors:
• **FELIXSON, Henrik
117 30 Stockholm (SE)**
• **ANDERSSON, Jonny
151 68 Södertälje (SE)**

(74) Representative: **Scania CV AB
Patents, GP 117kv
151 87 Södertälje (SE)**

(56) References cited:
WO-A1-2009/072965     DE-A1-102008 019 174
DE-A1-102011 118 135     DE-A1-102011 121 853
JP-A- 2004 025 956

**Description**

TECHNICAL FIELD

The invention relates to a method for adjustment of a vehicle's progress on a road relative to a vehicle ahead. The invention relates to a cruise control and a system for adjustment of a vehicle's progress on a road relative to a vehicle ahead. The invention also relates to a motor vehicle. The invention also relates to a computer program and a computer program product.

BACKGROUND

When driving with an adaptive cruise control, the speed is adjusted according to the vehicle ahead. In order to optimise fuel consumption in vehicles, whose speed is adjusted to a vehicle ahead, it is suitable to increase the distance to a heavy goods vehicle before an uphill slope, and also to increase the distance to a lighter vehicle before a downhill slope. Likewise, the distance to a lighter vehicle may also advantageously be reduced before an uphill slope. These measures minimise the fuel consumption by reducing braking and reducing air resistance, respectively.

One way of facilitating an optimal adjustment to a vehicle ahead in order to minimise fuel consumption, is to use so-called vehicle-to-vehicle-communication, wherein relevant information in the form of, for example, an expected velocity profile of the vehicle ahead may be communicated to the vehicle behind. However, there is currently no developed standard for vehicle-to-vehicle-communication.

A method for directly determining the mass of a vehicle ahead known in the art is disclosed in document JP 2004 025956 A.

OBJECTIVE OF THE INVENTION

One objective of the present invention is to achieve a method and a system for adjustment of a vehicle's progress on a road relative to a vehicle ahead, facilitating improved energy economy.

SUMMARY OF THE INVENTION

These and other objectives, which are set out in the description below, are achieved with a method, a system, a motor vehicle, a computer program and a computer program product according to the enclosed independent claims. The preferred embodiments of the method and the system are defined in the attached non-independent claims.

According to one embodiment, a method for control of an adaptive cruise control in a vehicle is achieved. According to the method it is determined that the vehicle ahead is in a state, wherein the vehicle ahead is neither accelerated or decelerated. When the vehicle ahead is in a state, wherein the vehicle ahead is neither accelerated or decelerated, a determination of the mass of the vehicle ahead is carried out, from a kinetic relation of the vehicle ahead, based on the use of a kinetic relation, wherein a continuous determination of speed and speed changes in the vehicle ahead, and of the gradient of the road, on which said vehicle ahead is driven, is carried out. Control of the adaptive cruise control is carried out depending on the determined mass of the vehicle ahead.

According to some examples described, a method for adjustment of a vehicle's progress on a road relative to a vehicle ahead may be achieved, from a fuel economy point of view, comprising the step of: determining a basis for adjustment of the distance between said vehicle and the vehicle ahead, based on the use of a kinetic relation as regards to the progress of the vehicle ahead, , wherein said use of the kinetic relation comprises continuous determination of the speed and speed changes in the vehicle ahead, as well as the gradient of the road, on which said vehicle ahead is travelling. Thus, an improved energy economy is achieved, comprising fuel economy, since the vehicle, by thus using the kinetic relation as regards the vehicle ahead, may adjust the distance to the vehicle ahead in connection with the road gradient, so that, for improved energy economy, unnecessary braking and acceleration may be avoided to a greater extent.

According to one embodiment, the method comprises the step of continuously determining a state, wherein the vehicle ahead is neither accelerated nor decelerated during said progress, as a basis for use of the kinetic relation. Thus, an efficient manner of using the kinetic relation regarding the vehicle ahead is facilitated, in order thus to optimise the adjustment of the distance to the vehicle ahead.

According to one embodiment, the method comprises the step of determining a basis for determination of the mass of the vehicle ahead, depending on the fulfilment of the criteria regarding the behaviour of the kinetic relation at the thus continuously determined states, wherein the vehicle ahead is neither accelerated nor decelerated. By thus determining the mass of the vehicle ahead, an adjustment of the distance to the vehicle ahead in connection with the road gradient is possible, so that, for improved energy economy, unnecessary braking and acceleration may be avoided to a greater extent.

According to one embodiment of the method, said continuously determined states, wherein the vehicle ahead is neither accelerated nor decelerated, consist of states in the form of so-called coasting or so-called dragging of the vehicle ahead.

According to one embodiment, the method comprises the step of - based on the thus determined mass of the vehicle ahead, the determined acceleration, during the assumed full use of the propulsion capacity of the vehicle ahead, and the gradient of the road, on which said vehicle ahead is driven - , determining said propulsion capacity based on said kinetic relation. By thus determining the propulsion capacity of the vehicle ahead, the potential for adjustment is improved further, since for optimised energy economy, the ability of the vehicle ahead to go uphill may be estimated, in order to adjust the distance in connection with an uphill slope. The adaptive cruise control may thus be controlled also depending on the determined propulsion capacity of the vehicle ahead.

The embodiments of the cruise control and the system have corresponding advantages with the corresponding embodiments for the above described method.

DESCRIPTION OF DRAWINGS

The present invention will be understood more easily with reference to the following detailed description, read in conjunction with the enclosed drawings, where the same reference numerals refer to the same parts throughout the several views, and in which:

Fig. 1 schematically illustrates a motor vehicle, according to one embodiment of the present invention;

Fig. 2 schematically illustrates a vehicle travelling on a road with a certain gradient and the forces acting on such vehicle;

Fig. 3 schematically illustrates a system for adjustment of a vehicle's progress on a road in relation to a vehicle ahead, from an energy economy point of view, according to one embodiment of the present invention;

Fig. 4 schematically illustrates a block diagram of a method to determine the mass of a vehicle ahead;

Fig. 5 schematically illustrates a block diagram of a method to determine the propulsion capacity of a vehicle ahead;

Fig. 6 schematically illustrates a block diagram of a method for adjustment of a vehicle's progress on a road in relation to a vehicle ahead, from an energy economy point of view, according to one embodiment of the present invention; and

Fig. 7 schematically illustrates a computer according to one embodiment of the present invention.

DESCRIPTION OF EMBODIMENTS

The term "link" herein refers to a communications link, which may be a physical line, such as an opto-electronic communication line, or a non-physical line, such as a wireless connection, e.g. a radio or microwave link.

The term "to continuously determine" as used herein, for example at the determination "continuously to determine the speed of the vehicle ahead", relates to uninterrupted determination or determination in intervals, i.e. where the determination is performed with a certain repeated occurrence, which may be regular, and may be time based or distance based.

The term "dragging of the vehicle's engine" as used herein relates to driving of the vehicle, wherein the vehicle's wheels crank the vehicle's engine without any fuel injection into the engine. The term "dragging of the vehicle's engine" may occur during a shifting process, wherein the shift may for example be required at dragging of the engine from a certain higher speed, for example 70 km/h, to a substantially lower speed, for example 30 km/h. At lower gears, larger friction losses are obtained, i.e. the lower the gear, the higher the deceleration. The term "dragging of the vehicle's engine" accordingly comprises driving of the vehicle, wherein the vehicle's wheels crank the vehicle's engine without any fuel injection into the engine occurring, but wherein shifting processes may occur.

The term "coasting" as used herein relates to driving of the vehicle, wherein the vehicle's powertrain is unclutched, so that the wheels of the vehicle do not crank the vehicle's engine, for example by way of a gear in neutral and/or declutching.

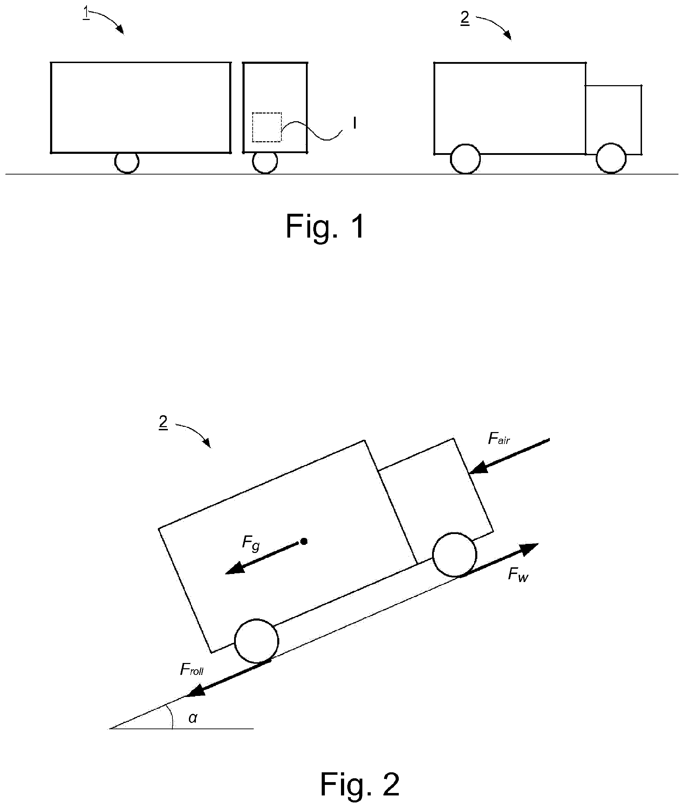

Fig. 1 schematically illustrates a motor vehicle 1 according to one embodiment of the present invention and a vehicle 2 ahead of vehicle 1. The exemplified vehicle 1 consists of a heavy goods vehicle in the form of a truck. The exemplified vehicle 2 also consists of a heavy goods vehicle in the form of a truck. Vehicle 1 and/or vehicle 2 may alternatively consist of any suitable vehicle, such as a bus or a passenger car. Vehicle 1 comprises a system I for adjustment of a vehicle's progress on a road in relation to a vehicle 2 ahead, according to the present invention.

Fig. 2 schematically illustrates a vehicle 2 travelling on a road with a certain gradient, and the forces acting on such vehicle, wherein the vehicle 2 consists of the vehicle ahead, illustrated in Fig. 1.

The forces acting on the vehicle 2 are internal forces and external forces. The internal forces comprise the driving force and the braking force, and are referred to as $F_w$. The external forces acting on the vehicle are air resistance, referred to as $F_{air}$, rolling resistance referred to as $F_{roll}$, and the force of gravity referred to as $F_g$. The longitudinal forces in the form of internal and external forces entail the following longitudinal dynamics of the vehicle ahead.

$$F_w - F_{air} - F_g - F_{roll} = ma$$

where $m$ is the mass of the vehicle ahead and $a$ is the acceleration of the vehicle ahead.

The air resistance $F_{air}$ may be expressed through the model:

$$F_{air} = \frac{1}{2} \rho_{air} C_d A v^2$$

where $\rho_{air}$ is air density, $A$ is the front area of the vehicle ahead, $C_d$ is the air resistance coefficient and $v$ is the speed of the vehicle ahead.

The rolling resistance $F_{roll}$ may also be expressed as:

$$F_{roll} = mg c_r \cos(\alpha)$$

where $m$ is the mass off the vehicle ahead, $g$ is gravity, $c_r$ is the rolling resistance coefficient and $\alpha$ is the gradient of the road on which the vehicle ahead is driven.

The force of gravity may be expressed as:

$$F_g = mg \sin(\alpha)$$

Accordingly:

$$F_w - \frac{1}{2} \rho_{air} C_d A v^2 - mg c_r \cos(\alpha) - mg \sin(\alpha) = ma$$

Based on this, it follows that:

$$\frac{a + g \sin(\alpha) + g c_r \cos(\alpha)}{v^2} = \frac{F_w}{mv^2} - \frac{1}{2} \rho_{air} C_d A v^2 \frac{1}{m}$$

When the internal forces in the form of the driving force and braking force are zero, i.e. where $F_w = 0$, and the vehicle ahead is accordingly neither accelerated nor decelerated during said progress, only the following term remains:

$$- \frac{1}{2} \rho_{air} C_d A v^2 \frac{1}{m}$$

This term is referred to as $\kappa$.

This term is unknown, but since all of these parameters are constant and positive, the term $\kappa$ is constant and negative.

The left term:

$$\frac{a + g \sin(\alpha) + g c_r \cos(\alpha)}{v^2}$$

contains variables that may be determined and constitute a kinetic relation of the vehicle ahead.

Based on the use of the kinetic relation as regards the progress of the vehicle ahead in accordance with:

$$\frac{a + g \sin(\alpha) + g c_r \cos(\alpha)}{v^2} = -\frac{1}{2} \rho_{air} C_d A v^2 \frac{1}{m}$$

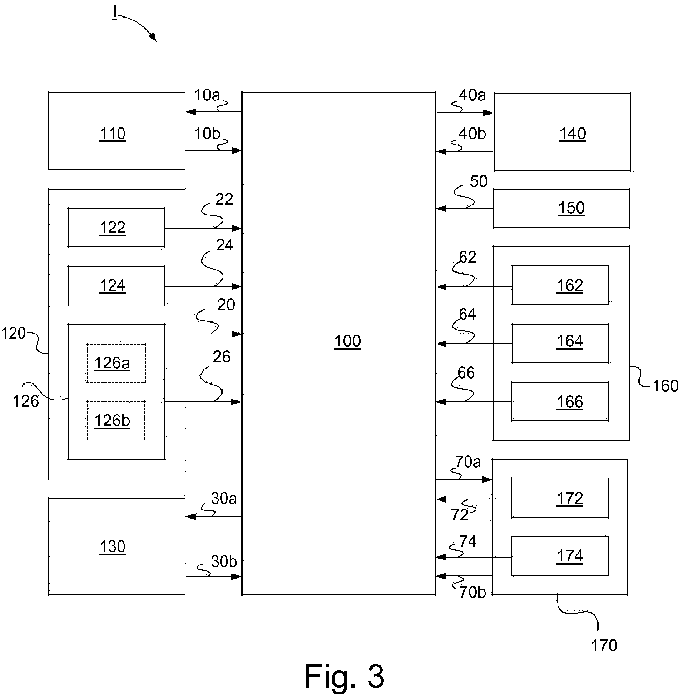

it is possible to determine a basis for adjustment of the distance between a vehicle and the vehicle ahead. This is explained in more detail below with reference to Figs. 3-7.

Fig. 3 schematically illustrates a block diagram of a system I, for adjustment of a vehicle's progress on a road in relation to a vehicle ahead, from an energy economy point of view, according to one embodiment of the present invention.

The system I comprises an electronic control device 100.

The system I comprises means 110 to determine, based on using a kinetic relation as regards the progress of the vehicle ahead, the basis for adjustment of the distance between said vehicle and the vehicle ahead.

The system comprises means 120 for continuous determination of the kinetic relation as regards the progress of the vehicle ahead.

The means 120 for continuous determination of the kinetic relation as regards the progress of the vehicle ahead comprises means 122, for continuous determination of the speed of the vehicle ahead. The means 122 for continuous determination of the speed of the vehicle ahead comprises means to determine the vehicle's speed, i.e. the speed of the own vehicle, which means according to one version comprises the vehicle's speedometer. The means 122 for continuous determination of the speed of the vehicle ahead uses the thus determined speed for the own vehicle, in order to determine the speed of the vehicle ahead. The means 122 for continuous determination of the speed of the vehicle ahead comprises radar elements to determine the distance to the vehicle ahead, and any potential change of the distance to the vehicle ahead. The means 122 for the continuous determination of the speed of the vehicle ahead comprises, according to one version, a camera element.

The means 120 for continuous determination of the kinetic relation as regards the progress of the vehicle ahead, comprises means 124 for the continuous determination of speed changes in the vehicle ahead. The means 124 for continuous determination of speed changes of the vehicle ahead comprises means to determine the vehicle's speed and speed changes in the vehicle, i.e. the speed of the own vehicle, and speed changes in the own vehicle, which means according to one version, comprises the vehicle's speedometer. The means 124 for continuous determination of speed changes of the vehicle ahead uses the thus determined speed and speed changes in the own vehicle, in order to determine speed changes of the vehicle ahead. The means 124 for continuous determination of speed changes of the vehicle ahead comprises radar elements to determine the distance to the vehicle ahead, and any potential change of the distance to the vehicle ahead. The means 124 for continuous determination of speed changes of the vehicle ahead according to one version comprises a camera element.

The means 120 for continuous determination of the kinetic relation as regards the progress of the vehicle ahead comprises means 126 for continuous determination of the gradient of the road, on which said vehicle ahead is travelling.

The means 126 for continuous determination of the gradient of the road, on which said vehicle ahead is travelling according to one version comprises radar elements for the determination of the distance to the vehicle ahead.

The means 126 for continuous determination of the gradient of the road, on which said vehicle ahead is travelling according to one version comprises a laser scanner for the determination of the distance to the vehicle ahead, and, in applicable cases, the gradient of the road, on which said vehicle ahead is travelling.

The means 126 for continuous determination of the gradient of the road, on which said vehicle ahead is travelling according to one version comprises, a camera element for the determination of the distance to the vehicle ahead, and in applicable cases, the gradient of the road, on which said vehicle ahead is travelling.

The means 126 for continuous determination of the gradient of the road, on which said vehicle ahead is travelling, according to one version comprises a map information device 126a, comprising map data with characteristics of the road along the vehicle's route, comprising topology along the route of both the vehicle and the vehicle ahead, for the determination of the gradient of the road, on which the vehicle ahead is travelling.

The means 126 for continuous determination of the gradient of the road, on which said vehicle ahead is travelling, according to one version comprises means 126b to determine the vehicle's position, in order thus to be able to determine the position of the vehicle ahead. The means 126b to determine the position of the vehicle ahead comprises a geographical positioning system, for example GPS, in order to continuously determine the vehicle's position along the route, and thus the position of the vehicle ahead along the route, based on the distance to the vehicle ahead.

The system I comprises means 130 to continuously determine the states, wherein the vehicle ahead is neither accelerated nor decelerated during said progress, as a basis for use of the kinetic relation. Said continuously determined states, wherein the vehicle ahead is neither accelerated nor decelerated, consists of states in the form of so-called coasting or so-called dragging of the vehicle ahead.

The system I comprises means 140 to determine - depending on the fulfilment of the criteria regarding the behaviour of the kinetic relation at the thus continuously determined states, wherein the vehicle ahead is neither accelerated nor decelerated -, a basis for determination of the mass of the vehicle ahead.

The kinetic relation as regards the progress of the vehicle ahead, wherein the vehicle ahead is neither accelerated nor decelerated, is expressed, according to one version, as:

$$\frac{a + g\sin(\alpha) + gc_r\cos(\alpha)}{v^2} = -\frac{1}{2}\rho_{air}C_dAv^2\frac{1}{m}$$

where a is the acceleration of the vehicle ahead, i.e. speed changes of the vehicle ahead, $g$ is gravity, $\alpha$ is the gradient of the road, on which said vehicle ahead is travelling, $c_r$ is the rolling resistance coefficient of the vehicle ahead, $v$ is the speed of the vehicle ahead, $\rho_{air}$ is the air density, $A$ is the frontal area of the vehicle ahead, $m$ is the mass of the vehicle ahead and $C_d$ is the air resistance coefficient.

The system I comprises means 150 to determine the rolling resistance coefficient of the vehicle ahead. The means 150 to determine the rolling resistance coefficient consists, according to one version, of a constant value corresponding to the value for the vehicle ahead, for example a heavy goods vehicle, wherein the value for the rolling resistance coefficient is assumed to be a constant value, corresponding to the value for a heavy goods vehicle. The means 150 to determine the rolling resistance coefficient according to one version comprises modelling means, in order to estimate the rolling resistance with vehicle characteristics of the vehicle ahead, wherein the vehicle characteristics are determined, according to one version, with a camera element and wherein the vehicle characteristics, according to one version comprise the number of shafts in the vehicle, and the estimated dimensions of the vehicle.

The system I comprises means 160 to determine the air resistance of the vehicle ahead.

The means 160 to determine the air resistance of the vehicle ahead comprise means 162 to determine the frontal area of the vehicle ahead. The means 162 to determine the frontal area of the vehicle ahead consists of, according to one version, a constant value corresponding to the frontal area A of the vehicle ahead, for example a heavy goods vehicle, wherein the value for air resistance is assumed to be a constant value, corresponding to a heavy goods vehicle, i.e. the frontal area of the vehicle ahead, according to one version comprising air deflector devices to reduce air resistance.

The means 160 to determine air resistance according to one version comprises means 164 to determine the air resistance coefficient of the vehicle ahead. The means 164 to determine the air resistance coefficient consists of, according to one version, a constant value corresponding to the vehicle ahead, for example a heavy goods vehicle, wherein the value for the air resistance coefficient is assumed to be a constant value, corresponding to a heavy goods vehicle. The means 164 for determination of the air resistance coefficient, according to one version comprises modelling means to estimate the rolling resistance with the use of vehicle characteristics for the vehicle ahead, wherein the vehicle characteristics according to one version are determined with a camera element, and wherein the vehicle characteristics according to one version comprise the number of shafts in the vehicle, and the estimated dimensions of the vehicle.

The means 160 to determine air resistance according to one version comprises means 166 to determine air density, which, according to one version, is assumed to be a constant value. The means 166 to determine air density comprises, according to one version, a barometer.

The means 160 to determine air resistance according to one version comprises means to determine the vehicle speed of the vehicle ahead, which means, according to one version, consists of the means 122.

The right hand side $\left(-\frac{1}{2}\rho_{air}C_dAv^2\frac{1}{m}\right)$ consists of the constant term $\kappa$.

The left hand side $\left(\frac{a+g\sin(\alpha)+gc_r\cos(\alpha)}{v^2}\right)$ consists of known terms determined according to the above with the means 122, the means 124 and the means 126, wherein the rolling resistance $c_r$ according to one version is assumed to be a constant value, corresponding to the type of vehicle, of which the vehicle ahead consists, for example a heavy goods vehicle such as a truck.

The system comprises means 170 to determine - based on the thus determined mass of the vehicle ahead, the determined acceleration during the assumed full use of the propulsion capacity of the vehicle ahead, and the gradient of the road, on which said vehicle ahead is travelling - , said propulsion capacity based on said kinetic relation. The propulsion capacity according to one version comprises the engine output of the vehicle ahead.

The means 170 to determine said propulsion capacity based on said kinetic relation comprises means 172 to determine acceleration of the vehicle ahead, during the assumed full use of the propulsion capacity of the vehicle ahead. The means 172 to determine the acceleration according to one version comprises or consists of the means 124 for continuous determination of speed changes of the vehicle ahead.

The means 170 to determine said propulsion capacity based on said kinetic relation comprises means 174 to determine the gradient of the road, on which said vehicle ahead is travelling. The means 174 according to one version comprises or consists of the means 126 for continuous determination of the gradient of the road, on which the vehicle ahead is travelling.

The kinetic relation as regards the progress of the vehicle ahead, during the assumed full use of the propulsion capacity of the vehicle ahead, , according to one version is expressed as:

$$ m(a + g\sin(\alpha) + gc_r\cos(\alpha) + \frac{1}{2}\rho_{air}C_dAv^2) = F_{w,max} $$

where $F_{w,max}$ accordingly is the driving force for maximum propulsion capacity.

The electronic control device 100 is signal-connected to the means 110, in order to - based on the use of a kinetic relation as regards the progress of the vehicle ahead -, determine the basis for adjusting the distance between a vehicle and the vehicle ahead, via a link 10b. The electronic control device 100 is arranged, via the link 10b, to receive a signal from said means 110, representing data for adjustment of the distance between the vehicle and the vehicle ahead.

The electronic control device 100 is signal-connected to the means 120 for continuous determination of the kinetic relation as regards the vehicle ahead, via a link 20. The electronic control device 100 is arranged, via the link 20, to receive a signal from the means 120, representing data for the kinetic relation as regards the progress of the vehicle ahead.

The electronic control device 100 is signal-connected to the means 122 for continuous determination of the speed of the vehicle ahead, via a link 22. The electronic control device 100 is arranged, via the link 22, to receive a signal from the means 122, representing speed data regarding the speed of the vehicle ahead.

The electronic control device 100 is signal-connected to the means 124 for continuous determination of speed changes of the vehicle ahead, via a link 24. The electronic control device 100 is arranged, via the link 24, to receive a signal from the means 124, representing speed change data for the vehicle ahead.

The electronic control device 100 is signal-connected to the means 126 for continuous determination of the gradient of the road, on which said vehicle ahead is travelling, via a link 26. The electronic control device 100 is arranged, via the link 26, to receive a signal from the means 126, representing gradient data 126 for the gradient of the road, on which said vehicle ahead is travelling.

The electronic control device 100 is signal-connected to the means 130, in order to continuously determine the state, wherein the vehicle ahead is neither accelerated nor decelerated during said progress, as a basis for use of the kinetic relation, via a link 30a. The electronic control device 100 is arranged, via the link 30a, to send a signal to the means 130, representing data for the kinetic relation as regards the progress of the vehicle ahead, for the determination of a state, wherein the vehicle ahead is neither accelerated nor decelerated.

The electronic control device 100 is signal-connected to the means 130, in order to continuously determine states, wherein the vehicle ahead is neither accelerated nor decelerated during said progress, as a basis for use of the kinetic relation, via a link 30b. The electronic control device 100 is arranged, via the link 30b, to receive a signal from the means 130, representing data for states, wherein the vehicle ahead is neither accelerated nor decelerated, comprising coasting data and/or dragging data.

The electronic control device 100 is signal-connected to the means 140 in order to - depending on the fulfilled criteria regarding the behaviour of the kinetic relation at the thus continuously determined states, wherein the vehicle ahead is neither accelerated nor decelerated -, determine the bases for determination of the mass of the vehicle ahead via, a link 40a. The electronic control device 100 is arranged, via the link 40a, to send a signal to the means 140, representing data for states, wherein the vehicle ahead is neither accelerated nor decelerated, comprising coasting data and/or dragging data.

The electronic control device 100 is signal-connected to the means 140 in order to - depending on the fulfilled criteria regarding the behaviour of the kinetic relation at the thus continuously determined states, wherein the vehicle ahead is neither accelerated nor decelerated -, determine the basis for determination of the mass of the vehicle ahead, via a link 40b. The electronic control device 100 is arranged, via the link 40b, to receive a signal from the means 140, representing mass data for the vehicle ahead.

The electronic control device 100 is signal-connected to the means 150 in order to determine the rolling resistance coefficient of the vehicle ahead, via a link 50. The electronic control device 100 is arranged, via the link 50, to receive a signal from the means 150, representing rolling resistance coefficient data for the vehicle ahead.

The electronic control device 100 is signal-connected to the means 162 in order to determine the frontal area of the vehicle ahead, via a link 62. The electronic control device 100 is arranged, via the link 62, to receive a signal from the means 162, representing frontal area data for the vehicle ahead.

The electronic control device 100 is signal-connected to the means 164 in order to determine the air resistance coefficient of the vehicle ahead, via a link 64. The electronic control device 100 is arranged, via the link 64, to receive a signal from the means 164, representing air resistance data for the air resistance of the vehicle ahead.

The electronic control device 100 is signal-connected to the means 166 in order to determine the air density, via a link 66. The electronic control device 100 is arranged, via the link 66, to receive a signal from the means 166, representing air density data.

The electronic control device 100 is signal-connected to the means 110 in order to, based on the use of a kinetic relation as regards the progress of the vehicle ahead, determine a basis for adjusting the distance between a vehicle and the vehicle ahead, via a link 10a. The electronic control device 100 is arranged, via the link 10a, to send a signal to the means 110, representing data for the kinetic relation as regards the progress of the vehicle ahead, comprising mass data for the mass of the vehicle ahead.

The electronic control device 100 is signal-connected to the means 170 in order to - based on the thus determined mass of the vehicle ahead, the determined acceleration during the assumed full use of the propulsion capacity of the vehicle ahead, and the gradient of the road, on which said vehicle ahead is travelling -, determine said propulsion capacity, based on said kinetic relation, via a link 70b. The electronic control device 100 is arranged, via the link 70b, to receive a signal from the means 170, representing data for adjustment of the distance between the vehicle and the vehicle ahead.

The electronic control device 100 is signal-connected to the means 172 in order to determine acceleration of the vehicle ahead, during the assumed full use of the propulsion capacity of the vehicle ahead, via a link 72. The electronic control device 100 is arranged, via the link 72, to receive a signal from the means 172, representing acceleration data for the vehicle ahead.

The electronic control device 100 is signal-connected to the means 174 in order to determine the gradient of the road, on which said vehicle ahead is travelling, via a link 74. The electronic control device 100 is arranged, via the link 74, to receive a signal from the means 174, representing gradient data for the gradient of the road, on which said vehicle ahead is travelling.

The electronic control device 100 is signal-connected to the means 170 in order to - based on the thus determined mass of the vehicle ahead, the determined acceleration during the assumed full use of the propulsion capacity of the vehicle ahead, and the gradient of the road, on which said vehicle ahead is travelling -, determine said propulsion capacity, based on said kinetic relation, via a link 70a. The electronic control device 100 is arranged, via the link 70a, to send a signal to the means 170, representing data for the kinetic relation as regards the progress of the vehicle ahead, comprising data for full use of the propulsion capacity of the vehicle ahead, and according to one version comprising engine output data for maximum engine output of the vehicle ahead.

The electronic control device 100 is arranged to process said data for the kinetic relation as regards the progress of the vehicle ahead - comprising said speed data, said data for speed changes, said gradient data, data for states, wherein the vehicle ahead is neither accelerated nor decelerated, and data for the rolling resistance coefficient -, in order thus to determine whether the criteria for the value $\kappa$ are met, i.e. whether $\kappa$ is mainly constant and negative.

The electronic control device 100 is arranged to process said data for the frontal area of the vehicle ahead, air resistance data and data for air density, and based on such values of $\kappa$, to determine said mass data for the mass of the vehicle ahead.

The electronic control device 100 is arranged to send data for the kinetic relation as regards the progress of the vehicle ahead, comprising mass data, to the means 110, as a basis for adjusting the distance to the vehicle ahead. The electronic control device 100 is arranged to process said data for adjusting the distance between the vehicle and the vehicle ahead, comprising said mass data, wherein the distance adjustment may be made based on such data.

The electronic control device 100 is arranged to process said acceleration data at the assumed full use of the propulsion capacity of the vehicle ahead, and gradient data for the gradient of the road, on which said vehicle ahead is travelling, and said determined mass data, in order thus to determine the maximum propulsion capacity of the vehicle ahead, and according to one version, comprising the maximum engine output of the vehicle ahead.

The electronic control device 100 is arranged to send data for the kinetic relation as regards the progress of the vehicle ahead, comprising data for the full use of the propulsion capacity of the vehicle ahead, and according to one version comprising engine output data for maximum engine output of the vehicle ahead, to the means 110, as a basis for adjustment of the distance to the vehicle ahead. The electronic control device 100 is arranged to process said data for adjusting the distance between the vehicle and the vehicle ahead, comprising said mass data for the maximum propulsion capacity of the vehicle ahead, wherein the distance adjustment may be made based on such data.

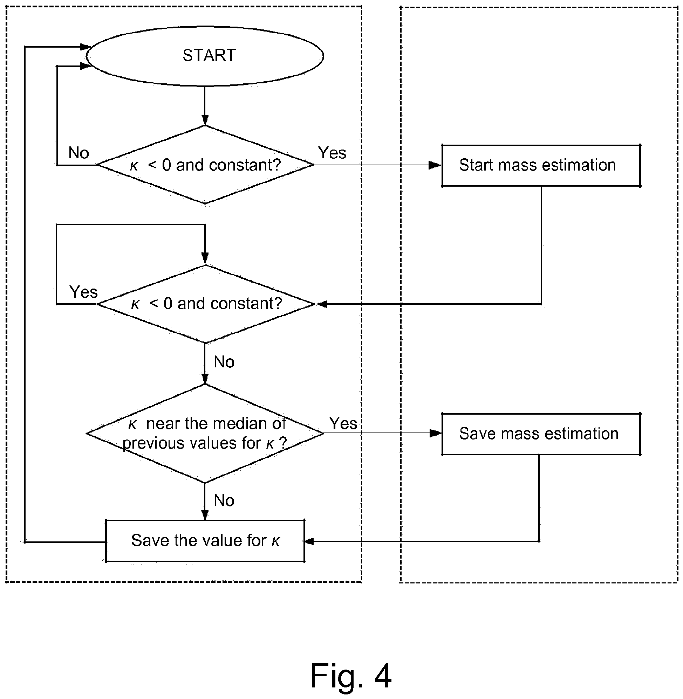

Fig. 4 schematically illustrates a block diagram of a method to determine the propulsion capacity of a vehicle ahead.

The above described kinetic relation is used here:

$$\frac{a + g\sin(\alpha) + gc_r\cos(\alpha)}{v^2} = -\frac{1}{2}\rho_{air}C_d A v^2 \frac{1}{m}$$

In one step, it is continuously determined whether the criteria for κ, i.e. the right hand side in the kinetic relation, are met, i.e. whether κ is constant and negative. κ is constant and negative at states, wherein the vehicle ahead is neither accelerated nor decelerated, i.e. where the vehicle ahead is coasting or dragging. This is achieved by way of continuously determining the left hand side in the kinetic relation, which is described with reference to Fig. 3. If the criteria for κ are not met, the determination is repeated.

If the criteria for κ are met, mass estimation for the determination of the mass of the vehicle ahead is started in one step.

Subsequently, in one step, it is established again whether the criteria for κ are met, and if the criteria for κ have been met, the determination of the criteria for κ is repeated.

If the criteria for κ have not been met, it is determined whether κ is near the median of previous values for κ.

If κ is near the median of previous values for κ, the mass estimation is saved, and the value for κ is also saved.

If κ is not near the median of previous values for κ, the value for κ is saved, and the method is restarted from the beginning.

Thus, the determination of the mass of the vehicle ahead is possible.

In cases where the vehicle ahead drags, the value for κ will have a greater negative value, than in cases where the vehicle ahead is coasting.

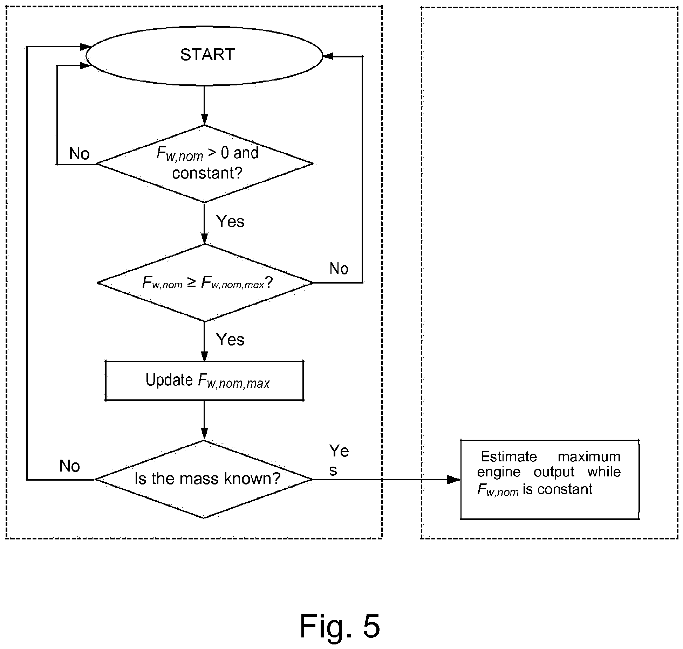

Fig. 5 schematically illustrates a block diagram of a method for adjustment of a vehicle's progress on a road in relation to a vehicle ahead, from an energy economy point of view, according to one embodiment of the present invention.

Here, the above mentioned kinetic relation as regards the progress of the vehicle ahead, during the assumed full use of the propulsion capacity of the vehicle ahead, is used as follows:

$$m\left(a + g\sin(\alpha) + gc_r\cos(\alpha) + \frac{1}{2}\rho_{air}C_d A v^2\right) = F_{w,max}$$

Where the mass of the vehicle ahead is not initially assumed to be known, a nominal mass is assumed as well as a nominal value $F_{w,nom}$ for the propulsion force.

In one step, it is continuously determined whether the criteria for $F_{w,nom}$ are met, i.e. whether $F_{w,nom}$ is positive and constant.

If the criteria for $F_{w,nom}$ are not met, the determination is repeated.

If the criteria for $F_{w,nom}$ are met, in one step it is determined whether $F_{w,nom}$ corresponds to the force $F_{w,nom,max}$ for full use of the propulsion capacity of the vehicle ahead.

If $F_{w,nom}$ corresponds to the force $F_{w,nom,max}$ for the full use of the propulsion capacity of the vehicle ahead, then $F_{w,nom,max}$ is updated in one step.

If $F_{w,nom}$ does not correspond to the force $F_{w,nom,max}$ for the full use of the propulsion capacity of the vehicle ahead, the method restarts with a determination of whether the criteria for $F_{w,nom}$ have been met.

In a subsequent step, it is determined whether the mass of the vehicle ahead is known. The mass of the vehicle ahead is according to one version determined as described with reference to Fig. 4.

If the mass of the vehicle ahead is not known, the method is repeated from the beginning.

If the mass of the vehicle ahead is known, the maximum engine output is estimated based on the mass, while $F_{w,nom}$ is constant.

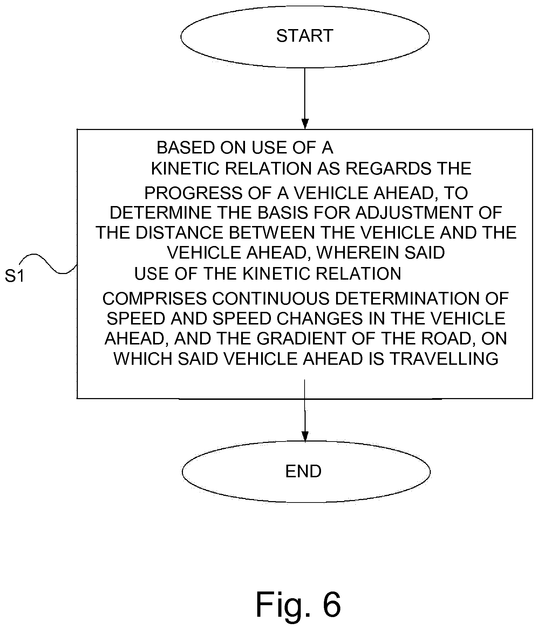

Fig. 6 schematically illustrates a block diagram of a method for adjustment of a vehicle's progress on a road in relation to a vehicle ahead, from an energy economy point of view, according to one embodiment of the present invention.

According to one embodiment, the method for adjustment of a vehicle's progress on a road in relation to a vehicle ahead, from an energy economy point of view, comprises a step S1. In this step, based on the use of a kinetic relation as regards the progress of the vehicle ahead, a basis for adjustment of the distance between said vehicle and the vehicle ahead is determined, wherein said use of the kinetic relation comprises continuous determination of the speed and speed changes in the vehicle ahead, as well as the gradient of the road, on which said vehicle ahead is travelling.

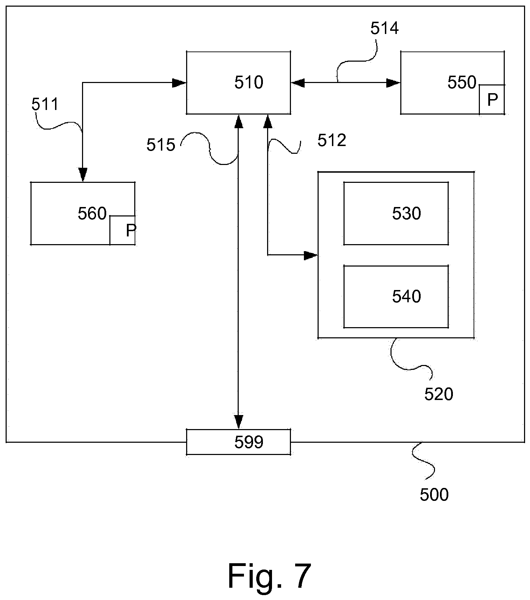

With reference to Fig. 7, a diagram of an embodiment of a unit 500 is shown. The control device 100 described with reference to Fig. 3 may, in one embodiment, comprise the unit 500. The unit 500 comprises a non-volatile memory 520, a data processing unit 510 and a read/write memory 550. The non-volatile memory 520 has a first memory part 530, wherein a computer program, such as an operating system, is stored to control the function of the unit 500. Further, the unit 500 comprises a bus controller, a serial communications port, an I/O device, an A/D converter, a date-time input and transmission unit, an event counter and an interrupt controller (not shown). The non-volatile memory 520 also has a second memory part 540.

A computer program P is provided, which comprises procedures for adjusting a vehicle's progress on a road in relation to a vehicle ahead, from an energy economy point of view, according to the innovative method. The program P comprises procedures to determine, based on the use of a kinetic relation as regards the progress of the vehicle ahead, a basis for adjusting the distance between said vehicle and the vehicle ahead, wherein said use of the kinetic relation comprises continuous determination of the speed and speed changes in the vehicle ahead, as well as the gradient of the road, on which said vehicle ahead is travelling. The program P may be stored in an executable manner, or in a compressed manner, in a memory 560 and/or a read/write memory 550.

A statement that the data processing unit 510 performs a certain function means that the data processing unit 510 performs a certain part of the program stored in the memory 560, or a certain part of the program stored in the read/write memory 550.

The data processing unit 510 may communicate with a data port 599 via a data bus 515. The non-volatile memory 520 is intended for communication with the data processing unit 510 via a data bus 512. The separate memory 560 is intended for communication with the data processing unit 510 via a data bus 511. The read/write memory 550 is arranged for communication with the data processing unit 510 via a data bus 514. The links connected with the control device 100 may e.g. be connected to the data port 599.

When data is received in the data port 599, it is temporarily stored in the second memory part 540. When input data received is temporarily stored, the data processing unit 510 is ready to carry out execution of code in the manner described above. The signals received in the data port 599 may be used by the device 500 to determine, based on the use of a kinetic relation as regards the progress of the vehicle ahead, a basis for adjusting the distance between said vehicle and the vehicle ahead, wherein said use of the kinetic relation comprises continuous determination of the speed and speed changes in the vehicle ahead, as well as the gradient of the road, on which said vehicle ahead is travelling.

Parts of the methods described herein may be carried out by the unit 500 with the help of the data processing unit 510, which runs the program stored in the memory 560 or the read/write memory 550. When the unit 500 runs the program, the procedures described herein are executed.

The foregoing description of the preferred embodiments of the present invention has been furnished for illustrative and descriptive purposes. It is not intended to be exhaustive, or to limit the invention to the variants described. Many modifications and variations will obviously be apparent to one skilled in the art. The embodiments have been chosen and described in order to best explicate the principles of the invention and its practical applications, and to thereby enable one skilled in the art to understand the invention in terms of its various embodiments and with the various modifications that are applicable to its intended use.

**Claims**

1.  Method to control an adaptive cruise control in a vehicle (1), comprising the steps:

    - to determine that the vehicle ahead (2) is in a state, wherein the vehicle ahead is neither accelerated nor decelerated,
    - when the vehicle ahead (2) is in a state, wherein the vehicle ahead is neither accelerated nor decelerated, to determine the mass of the vehicle ahead, from a kinetic relation of the vehicle ahead, based on the use of a kinetic relation, wherein continuous determination of speed and speed changes of the vehicle ahead, and of the gradient of the road, on which said vehicle ahead is travelling, is carried out and,
    - to control the adaptive cruise control, depending on the determined mass of the vehicle ahead.

2.  Method according to claim 1, where said continuously determined state, wherein the vehicle ahead (2) is neither accelerated nor decelerated, consists of states in the form of so-called coasting or so-called dragging of the vehicle ahead.

3.  Method according to claim 1 or 2, comprising the step, based on the thus determined mass of the vehicle ahead, on the determined acceleration during the assumed full use of the propulsion capacity of the vehicle ahead, and on the gradient of the road, on which said vehicle ahead is travelling, to determine said propulsion capacity of said vehicle ahead, based on said kinetic relation and to control the adaptive cruise control, depending on the determined propulsion capacity of the vehicle ahead.

4. An adaptive cruise control for a vehicle (1), comprising means arranged to:

   - determine that a vehicle is in a state, wherein the vehicle ahead (2) is neither accelerated nor decelerated,
   - when the vehicle ahead is in a state, wherein the vehicle ahead is neither accelerated nor decelerated, carry out a determination of the mass of the vehicle ahead from a kinetic relation of the vehicle ahead, based on the use of a kinetic relation, wherein continuous determination of speed and speed changes of the vehicle ahead, as well as the gradient of the road, on which said vehicle ahead is travelling, is carried out and
   - to control the adaptive cruise control, depending on the determined mass of the vehicle ahead.

5. Adaptive cruise control according to claim 4, wherein said continuous determined state, wherein the vehicle ahead is neither accelerated nor decelerated, consists of states in the form of so-called coasting or so-called dragging of the vehicle ahead.

6. Adaptive cruise control according to claim 4 or 5, comprising means (170) in order to, based on the thus determined mass of the vehicle ahead, which means comprise the means (172), determine acceleration, during the assumed full use of the propulsion capacity of the vehicle ahead, as well as means (174) for the determination of the gradient of the road, on which the said vehicle ahead is travelling, and means to determine the propulsion capacity of the vehicle ahead, based on said kinetic relation, and means to control the adaptive cruise control, depending on the determined propulsion capacity of the vehicle ahead.

7. Vehicle comprising a cruise control (I) according to any of claims 4-6.

8. Computer program (P) for the adjustment of a vehicle's progress on a road in relation to a vehicle ahead, from an energy economy point of view, wherein said computer program (P) comprises program code which, when executed in an electronic control device (100), or in another computer (500) connected to the electronic control device (100), causes the electronic control device (100) to carry out the steps according to claims 1-3.

9. Computer program product comprising a digital storage medium, which stores the computer program according to claim 8.


**Patentansprüche**

1. Verfahren zum Steuern eines adaptiven Geschwindigkeitsregelungssystems in einem Fahrzeug (1), umfassend die Schritte:

   - Feststellen, dass das vorausbefindliche Fahrzeug (2) sich in einem Zustand befindet, in dem das vorausbefindliche Fahrzeug weder beschleunigt noch verzögert wird,
   - wenn das vorausbefindliche Fahrzeug (2) sich in einem Zustand befindet, in dem das vorausbefindliche Fahrzeug weder beschleunigt noch verzögert wird, Ermitteln der Masse des vorausbefindlichen Fahrzeugs aus einer kinetischen Relation des vorausbefindlichen Fahrzeugs basierend auf der Verwendung einer kinetischen Relation, wobei eine fortlaufende Ermittlung einer Geschwindigkeit und von Geschwindigkeitsänderungen des vorausbefindlichen Fahrzeugs und des Gradienten der Straße, auf der das vorausbefindliche Fahrzeug fährt, durchgeführt wird, und
   - Steuern des adaptiven Geschwindigkeitsregelungssystems in Abhängigkeit der ermittelten Masse des vorausbefindlichen Fahrzeugs.

2. Verfahren nach Anspruch 1, wobei der fortlaufend ermittelte Zustand, in dem das vorausbefindliche Fahrzeug (2) weder beschleunigt noch verzögert wird, aus Zuständen in Gestalt eines sogenannten Schubbetriebs oder eines sogenannten Rollens des vorausbefindlichen Fahrzeugs besteht.

3. Verfahren nach Anspruch 1 oder 2, umfassend den Schritt, basierend auf der so ermittelten Masse des vorausbefindlichen Fahrzeugs, auf der ermittelten Beschleunigung während des angenommenen vollständigen Einsatzes der Vortriebsfähigkeit des vorausbefindlichen Fahrzeugs und auf dem Gradienten der Straße, auf der das vorausbefindliche Fahrzeug fährt, des Ermittelns der Vortriebsfähigkeit des vorausbefindlichen Fahrzeugs basierend auf der kinetischen Relation und des Steuerns des adaptiven Geschwindigkeitsregelungssystems in Abhängigkeit der ermittelten Vortriebsfähigkeit des vorausbefindlichen Fahrzeugs.

4. Adaptives Geschwindigkeitsregelungssystem für ein Fahrzeug (1), umfassend Mittel, die eingerichtet sind zum:

   - Feststellen, dass ein Fahrzeug sich in einem Zustand befindet, in dem das vorausbefindliche Fahrzeug (2) weder beschleunigt noch verzögert wird,
   - wenn das vorausbefindliche Fahrzeug sich in einem Zustand befindet, in dem das vorausbefindliche Fahrzeug weder beschleunigt noch verzögert wird, Durchführen einer Ermittlung der Masse des vorausbefindlichen Fahrzeugs aus einer kinetischen Relation des vorausbefindlichen Fahrzeugs basierend auf der Verwendung einer kinetischen Relation, wobei eine fortlaufende Ermittlung einer Geschwindigkeit und von Geschwindigkeitsänderungen des vorausbefindlichen Fahrzeugs sowie des Gradienten der Straße, auf der das vorausbefindliche Fahrzeug fährt, ausgeführt werden, und
   - Steuern des adaptiven Geschwindigkeitsregelungssystems in Abhängigkeit der ermittelten Masse des vorausbefindlichen Fahrzeugs.

5. Adaptives Geschwindigkeitsregelungssystem nach Anspruch 4, wobei der fortlaufend ermittelte Zustand, in dem das vorausbefindliche Fahrzeug weder beschleunigt noch verzögert wird, aus Zuständen in Gestalt eines sogenannten Schubbetriebs oder eines sogenannten Rollens des vorausbefindlichen Fahrzeugs besteht.

6. Adaptives Geschwindigkeitsregelungssystem nach Anspruch 4 oder 5, umfassend eine Einrichtung (170), die die Mittel (172) umfasst, zum Ermitteln einer Beschleunigung, basierend auf der solchermaßen ermittelten Masse des vorausbefindlichen Fahrzeugs, während des angenommenen vollständigen Einsatzes der Vortriebsfähigkeit des vorausbefindlichen Fahrzeugs, sowie eine Einrichtung (174) zur Ermittlung des Gradienten der Straße, auf der das vorausbefindliche Fahrzeug fährt, und Mittel zum Ermitteln der Vortriebsfähigkeit des vorausbefindlichen Fahrzeugs basierend auf der kinetischen Relation, und Mittel zum Steuern des adaptiven Geschwindigkeitsregelungssystems in Abhängigkeit der ermittelten Vortriebsfähigkeit des vorausbefindlichen Fahrzeugs.

7. Fahrzeug mit einem Geschwindigkeitsregelungssystem (I) nach einem der Ansprüche 4 bis 6.

8. Computerprogramm (P) zur Anpassung eines Fahrzeugfortschritts auf einer Straße bezüglich eines vorausbefindlichen Fahrzeugs aus energieökonomischer Sicht, wobei das Computerprogramm (P) einen Programmcode aufweist, der, wenn er in einer elektronischen Steuereinrichtung (100) oder in einem anderen mit der elektronischen Steuereinrichtung (100) verbundenen Computer (500) ausgeführt wird, die elektronische Steuereinrichtung (100) dazu veranlasst, die Schritte nach den Ansprüchen 1 bis 3 auszuführen.

9. Computerprogrammprodukt mit einem digitalen Speichermedium, welches das Computerprogramm nach Anspruch 8 speichert.

**Revendications**

1. Procédé pour contrôler un régulateur de vitesse adaptatif dans un véhicule (1), comprenant les étapes consistant à :

   - déterminer que le véhicule devant (2) est dans un état, dans lequel le véhicule devant n'est ni accéléré ni décéléré,
   - lorsque le véhicule devant (2) est dans un état, dans lequel le véhicule devant n'est ni accéléré ni décéléré, déterminer la masse du véhicule devant, à partir d'une relation cinétique du véhicule devant, sur base de l'utilisation d'une relation cinétique, dans laquelle une détermination continue de la vitesse et des changement de la vitesse du véhicule devant, et de la pente de la route, sur laquelle ledit véhicule devant est en déplacement, est effectuée et,
   - pour contrôler le régulateur de vitesse adaptatif, en fonction de la masse déterminée du véhicule devant.

2. Procédé selon la revendication 1, où ledit état est déterminé continuellement, dans lequel le véhicule devant (2) n'est ni accéléré ni décéléré, est constitué d'états sous la forme de ce que l'on appelle la marche en roue libre ou de ce que l'on appelle la trainée du véhicule devant.

3. Procédé selon la revendication 1 ou 2, comprenant l'étape, sur base de la masse ainsi déterminée du véhicule devant, de l'accélération déterminée durant la pleine utilisation assumée de la capacité de propulsion du véhicule devant, et sur la pente de la route, sur laquelle ledit véhicule devant se déplace, pour déterminer ladite capacité de propulsion dudit véhicule devant, sur base de ladite relation cinétique et pour contrôler le régulateur de vitesse adaptatif, en fonction de la capacité de propulsion déterminée du véhicule devant.

4. Un régulateur de vitesse adaptatif pour un véhicule (1), comprenant des moyens agencés pour :

   - déterminer qu'un véhicule est dans un état, dans lequel le véhicule devant (2) n'est ni accéléré ni décéléré,
   - lorsque le véhicule devant est dans un état, dans lequel le véhicule devant n'est ni accéléré ni décéléré, effectuer une détermination de la masse du véhicule devant à partir d'une relation cinétique du véhicule devant, sur base de l'utilisation d'une relation cinétique, dans laquelle une détermination continue de la vitesse et des changements de vitesse du véhicule devant, ainsi que la pente de la route, sur laquelle ledit véhicule devant se déplace, est effectuée et
   - pour contrôler le régulateur de vitesse adaptatif, en fonction de la masse déterminée du véhicule devant.

5. Régulateur de vitesse adaptatif selon la revendication 4, dans lequel ledit état déterminé continu, dans lequel le véhicule devant n'est ni accéléré ni décéléré, est constitué d'états sous la forme de ce que l'on appelle la marche en roue libre ou ce que l'on appelle la trainée du véhicule devant.

6. Régulateur de vitesse adaptatif selon la revendication 4 ou 5, comprenant des moyens (170) pour, sur base de la masse ainsi déterminée du véhicule devant, lesquels moyens comprennent les moyens (172), déterminer l'accélération, durant la pleine utilisation assumée de la capacité de propulsion du véhicule devant, ainsi que des moyens (174) pour la détermination de la pente de la route sur laquelle se déplace ledit véhicule se déplace, et des moyens pour déterminer la capacité de propulsion du véhicule devant, sur base de ladite relation cinétique, et des moyens pour contrôler le régulateur de vitesse adaptatif, en fonction de la capacité de propulsion déterminée du véhicule devant.

7. Véhicule comprenant un régulateur de vitesse (I) selon l'une quelconque des revendications 4-6.

8. Programme informatique (P) pour l'ajustement d'une progression d'un véhicule sur une route par rapport à un véhicule devant, à partir d'un point de vue d'économie d'énergie, dans lequel ledit programme informatique (P) comprend un code du programme qui, lorsqu'il est exécuté sur un dispositif de commande électronique (100), ou sur un autre ordinateur (500) connecté au dispositif de commande électronique (100), amène le dispositif de commande électronique (100) à exécuter les étapes selon les revendications 1-3.

9. Produit de programme informatique comprenant un support de stockage numérique qui stocke le programme informatique selon la revendication 8.

EP 2 952 402 B1

Fig. 1

Fig. 2

14

I

110

10a
10b

122

22

124

24

120

20

126a

126

26

126b

100

130

30a

30b

140

40a
40b

150

50

162

62

164

64

160

166

66

172

70a
72

174

74

170

70b

# Fig. 3

Fig. 4

Fig. 5

START

S1

BASED ON USE OF A
KINETIC RELATION AS REGARDS THE
PROGRESS OF A VEHICLE AHEAD, TO
DETERMINE THE BASIS FOR ADJUSTMENT OF
THE DISTANCE BETWEEN THE VEHICLE AND THE
VEHICLE AHEAD, WHEREIN SAID
USE OF THE KINETIC RELATION
COMPRISES CONTINUOUS DETERMINATION OF
SPEED AND SPEED CHANGES IN THE VEHICLE
AHEAD, AND THE GRADIENT OF THE ROAD, ON
WHICH SAID VEHICLE AHEAD IS TRAVELLING

END

# Fig. 6

Fig. 7

**EP 2 952 402 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004025956 A